# EUROPÄISCHE PATENTSCHRIFT

(11) **EP 0 897 498 B1**
(45) Veröffentlichungstag und Bekanntmachung des Hinweises auf die Patenterteilung: **29.03.2000**
(21) Anmeldenummer: 97923852.4
(22) Anmeldetag: 07.05.1997
(51) Int. Cl.: F16H 61/02, B60K 41/04

(54) **VERFAHREN ZUR BEWERTUNG EINES ANFAHRVORGANGES BEI EINEM AUTOMATGETRIEBE**
PROCESS TO EVALUATE START-UP FOR AN AUTOMATIC GEARBOX
PROCEDE D'EVALUATION D'UNE PHASE DE DEMARRAGE DANS UNE BOITE AUTOMATIQUE

(30) Priorität: 10.05.1996 DE 19618811
(43) Veröffentlichungstag der Anmeldung: 24.02.1999
(73) Patentinhaber: ZF FRIEDRICHSHAFEN Aktiengesellschaft, 88038 Friedrichshafen (DE); ROBERT BOSCH GMBH, 70442 Stuttgart (DE)
(72) Erfinder: HENNEKEN, Markus, D-88079 Kressbronn (DE); SCHMID, Wolfgang, D-88085 Langenargen (DE); POLJANSEK, Marko, D-72768 Reutlingen (DE)
(74) Vertreter: Zietlow, Karl-Peter
(86) Internationale Anmeldenummer: EP9702319
(87) Internationale Veröffentlichungsnummer: WO9743569

(56) Entgegenhaltungen:
- EP-A- 0 707 162
- DE-A- 3 922 051
- US-A- 5 035 160
- US-A- 5 514 051

## Beschreibung

Die Erfindung betrifft ein Verfahren zur Bewertung eines Anfahrvorganges bei dem Automatgetriebe eines Fahrzeuges mittels eines elektronischen Getriebesteuergerätes mit einer Berechnungseinheit, einem Micro-Controller, einer Speichereinrichtung und einer Steuerungseinrichtung zur Ansteuerung eines hydraulischen Getriebesteuergerätes.

Aus der Praxis sind für elektro-hydraulisch gesteuerte Pkw-Automatgetriebe sogenannte "intelligente" Schaltprogramme bekannt.

Ein derartiges intelligentes Schaltprogramm ist beispielsweise in der DE-OS 39 22 051 beschrieben, wobei unter "intelligent" verstanden wird, daß der Fahrer eines Fahrzeuges keinen Wählknopf zur Einstellung eines bestimmten Schaltbereiches, wie z. B. für sportliche Fahrt oder ökonomische Fahrt, betätigen muß, da ein elektronisches Getriebesteuergerät aufgrund von Eingangsgrößen auf das Verhalten des Fahrers und damit den Fahrertyp schließt. Als Eingangsgrößen dienen beispielsweise das Signal einer Drosselklappe, die Drehzahl einer Brennkraftmaschine und die aus den Raddrehzahlen ermittelte Längs- und Querbeschleunigung. Gemäß dem Stand der Technik wird aus den Eingangsgrößen eine Fahraktivität bzw. ein Fahrertyp ermittelt. Aufgrund des Fahrertyps wird dann eine entsprechende Schaltkennlinie aus einer Mehrzahl von Schaltkennlinien ausgewählt. So wird beispielsweise für einen ruhigen Fahrertyp eine Schaltlinie mit niederen Schaltpunkten und für einen sportlichen Fahrertyp eine Schaltkennlinie mit hohen Schaltpunkten ausgewählt.

Da das Fahrverhalten eines Fahrers in verschiedenen Fahrsituationen unterschiedlich sein kann, würde z. B. ein ansonsten sportlicher Fahrer, der jedoch langsamere Anfahrvorgänge bevorzugt, eine generelle Einstufung seines Fahrverhaltens als sportlich in dieser Fahrsituation als störend empfinden. Das Schaltprogramm muß daher flexibel auf verschiedene Fahrsituationen reagieren können.

Aus der DE-PS 41 36 613 ist ein Verfahren bezüglich eines Anfahrvorganges bekannt, bei dem die Drosselklappenänderung während des Anfahrvorganges beobachtet wird. Diese Drosselklappenänderung wird mit einem vorgegebenen Drosselklappenbereich verglichen, wobei dieser Vergleich zur Auswahl einer entsprechenden Fahrstil-Kategorie führt.

Dieses aus dem Stand der Technik bekannte Verfahren weist jedoch den Nachteil auf, daß die Bewertung des Anfahrvorganges anhand der Drosselklappenänderung, welche das tatsächliche Verhalten eines Fahrzeuges nicht wiedergibt, fehlerbehaftet ist.

Der vorliegenden Erfindung liegt daher die Aufgabe zugrunde, ein Verfahren bereitzustellen, das den oben genannten Stand der Technik im Hinblick auf eine geringere Fehlerhaftigkeit bei der Bewertung eines Anfahrvorganges im Vergleich zu dem tatsächlichen Fahrzeugverhalten verbessert.

Diese Aufgabe wird ausgehend von dem Oberbegriff des Anspruches 1 durch die im kennzeichnenden Teil des Anspruches 1 aufgeführten Verfahrensschritte gelöst.

Die Erfindung bietet den Vorteil, daß durch die Verwendung des tatsächlich von der Brennkraftmaschine abgegebenen Momentes bzw. der Drehzahlen eine bessere Anpassung an das reale Fahrzeugverhalten erzielt wird.

Ein weiterer Vorteil der Erfindung besteht darin, daß durch die Verwendung des Zählers das Fahrverhalten und der Fahrstil eines Fahrers in hohem Maße berücksichtigt wird.

Weitere Vorteile der Erfindung ergeben sich aus den Unteransprüchen und der nachfolgenden, auf die prinzipmäßige Zeichnung Bezug nehmenden Beschreibung der Erfindung. Es zeigt:
- Fig. 1: ein stark schematisiertes Systemschaubild eines Automatgetriebes;
- Fig. 2: einen Programmablaufplan zur Bewertung einer Kurvenfahrt;
- Fig. 3: ein Kennfeld zur Ermittlung eines Inkrementes (INKR);
- Fig. 4: eine schematische Darstellung eines Zählers und
- Fig. 5: ein Koordinatensystem zur Bestimmung eines Fahrertypensollwertes aus einer Differenz DIFF(t) nach Fig 2.

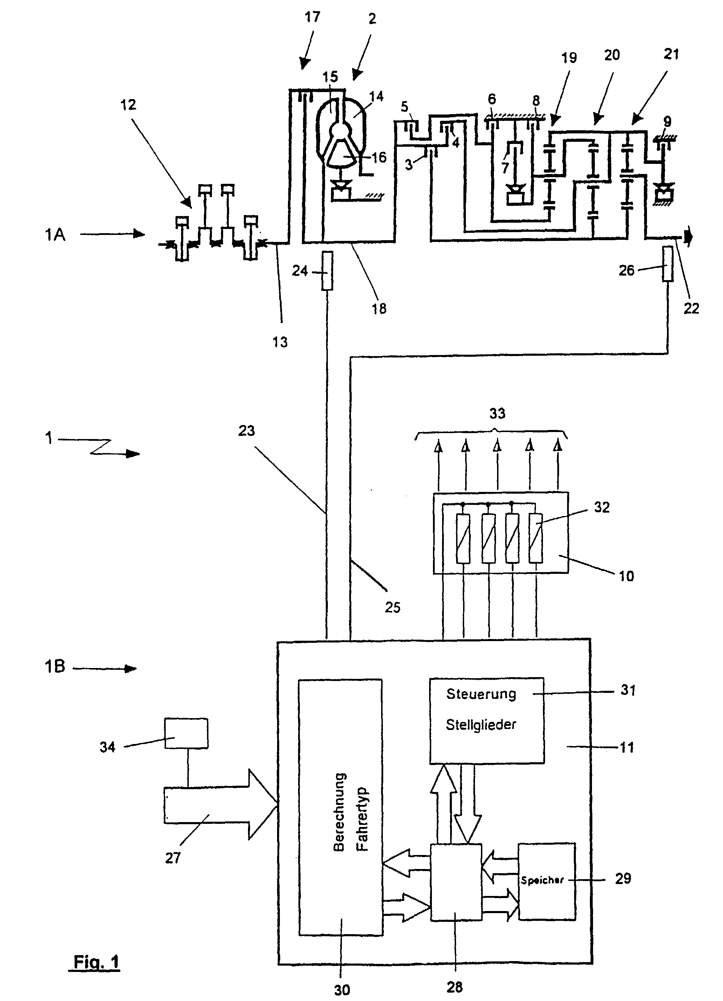

Bezug nehmend auf Fig. 1 ist ein stark schematisiertes Systemschaubild eines Automatgetriebes 1 dargestellt. Das Automatgetriebe 1 besteht aus einem mechanischen Teil 1A mit einem hydrodynamischen Wandler 2 und als Kupplungen bzw. Bremsen ausgebildeten Schaltelementen 3 bis 9 und aus einem Steuerungsteil 1B mit einem hydraulischen Steuergerät 10 und einem elektronischen Steuergerät 11. Das Automatgetriebe 1 wird von einer Antriebseinheit 12, welche zweckmäßiger Weise als Brennkraftmaschine ausgebildet ist, über eine Antriebswelle 13 angetrieben. Die Antriebswelle 13 ist mit einem Pumpenrad 14 des hydrodynamischen Wandlers 2, welcher des weiteren ein Turbinenrad 15 und ein Leitrad 16 aufweist, drehfest verbunden. Parallel zu dem hydrodynamischen Wandler 2 ist eine Wandlerkupplung 17 angeordnet. Die Wandlerkupplung 17 und das Turbinenrad 15 führen auf eine Turbinenwelle 18, wobei die Turbinenwelle 18 bei betätigter Wandlerkupplung 17 die gleiche Drehzahl wie die Antriebswelle 13 aufweist. Neben dem hydrodynamischen Wandler 2 und den Kupplungen bzw. Bremsen 3 bis 9 weist der mechanische Teil 1A des Automatgetriebes 1 zwei nicht näher bezeichnete Freiläufe und drei hintereinander angeordnete Planetenradsätze 19, 20 und 21 auf. Als Abtrieb ist bei dem Automatgetriebe 1 eine Getriebeausgangswelle 22 ausgebildet, welche auf ein nicht dargestelltes Differential führt, das über zwei Achshalbwellen - ebenfalls nicht dargestellte - Antriebsräder eines Fahrzeugs antreibt. Die Auswahl einer Gangstufe erfolgt über eine entsprechende Kupplungs-/Brems-Kombination. Da die beschriebenen Elemente des Automatgetriebes 1 für das weitere Verständnis der Erfindung nicht weiter von Bedeutung sind, wird an dieser Stelle nicht näher darauf eingegangen.

Von dem mechanischen Teil 1A des Automatgetriebes 1 zu dem elektronischen Steuergerät 11 führt eine Leitung 23 zur Übertragung eines Turbinendrehzahl-Signales, welches von einer Meßeinrichtung 24 an der Turbinenwelle 18 erzeugt wird, und eine Leitung 25 zur Übertragung eines Getriebeausgangsdrehzahl-Signales, das von einer Meßeinrichtung 26 an der Getriebeausgangswelle 22 erzeugt wird. Neben dem Getriebeausgangsdrehzahl-Signal und dem Turbinendrehzahl-Signal werden von einem die Brennkraftmaschine 12 steuernden Motorsteuergerät 27, welches in der Fig. 1 symbolhaft angedeutet ist, weitere Eingangsgrößen wie z. B. das Signal einer Drosselklappe, das Signal eines von der Brennkraftmaschine 12 abgegebenen Momentes M_M, die Drehzahl n_M der Brennkraftmaschine 12, eine Temperatur des Motors und des Hydraulikfluids des Automatgetriebes 1 sowie Raddrehzahlen n_Rad, die an einer Raddrehzahl-Meßeinrichtung 34 ermittelt werden, an das elektronische Steuergerät 11 übermittelt. In Abhängigkeit dieser Eingangsgrößen wählt das elektronische Steuergerät 11 über das hydraulische Steuergerät 10 eine entsprechende Gangstufe aus.

Das elektronische Steuergerät 11, welches in der Fig. 1 äußerst schematisiert dargestellt ist, weist hierzu einen Micro-Controller 28, eine Speichereinrichtung 29, eine Berechnungseinheit 30 zur Ermittlung des Fahrertyps und eine Steuerungseinrichtung 31 auf. Dabei sind in der Speichereinrichtung 29, welche zweckmäßigerweise als EProm, EEProm oder als gepufferter RAM ausgeführt ist, die getrieberelevanten Daten, zu denen beispielsweise Programme und Daten sowie Diagnosedaten zählen, abgelegt. Die Steuerungseinrichtung 31 dient zur Ansteuerung von sich in dem hydraulischen Steuergerät 10 befindlichen Stellgliedern 32, welche zur Druckbeaufschlagung der Kupplungen bzw. Bremsen 3 bis 9 vorgesehen sind, wie durch die Pfeile 33 symbolhaft in Fig. 1 angedeutet ist.

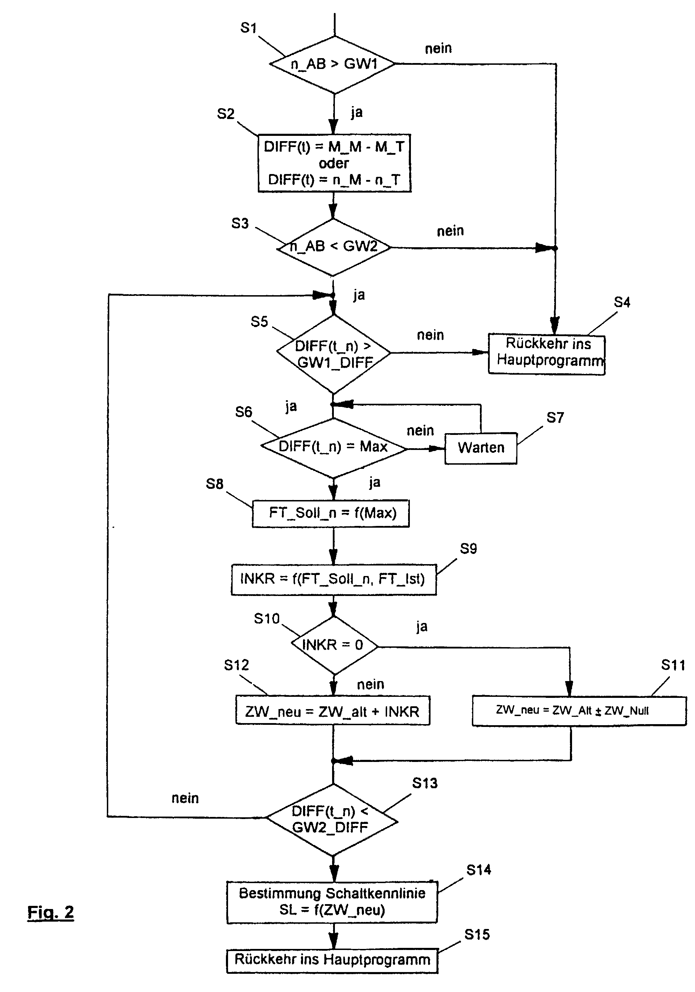

Bezug nehmend auf Fig. 2 ist ein Programmablaufplan für ein Unterprogramm zur Bewertung eines Anfahrvorganges dargestellt.

Zu Beginn wird in einer ersten Unterscheidungsfunktion Sl geprüft, ob eine an der Getriebeabtriebswelle 22 ermittelte Getriebeausgangsdrehzahl n_AB größer als ein vorgegebener erster Grenzwert GW1 ist. Falls die Getriebeausgangsdrehzahl n_AB kleiner als oder gleich dem ersten Grenzwert GW1 ist, wird eine Verarbeitungsfunktion S4 zur Rückkehr in ein Hauptprogramm aktiviert. Falls die Getriebeausgangsdrehzahl n_AB größer als der erste Grenzwert GW1 ist, wird eine Berechnungsfunktion S2 zur Berechnung einer zeitabhängigen Differenz DIFF(t) zwischen dem Motordrehmoment M_M und dem Moment M_T der Turbinenwelle 18 oder der Differenz DIFF(t) zwischen der Motordrehzahl n_M und der Drehzahl n_T der Turbinenwelle 18 aktiviert. Das aktuelle von der Brennkraftmaschine abgegebene Motordrehmoment M_M wird hierzu von dem Motorsteuergerät 27 an das elektronische Getriebesteuergerät 11 übermittelt oder es wird in der Berechnungseinheit 30 des elektronischen Getriebesteuergerätes 11 aus der Motordrehzahl n_M und einer Einspritzzeit t_ein errechnet. Das Moment M_T an der Turbinenwelle 18 kann zum einem direkt gemessen werden oder zum anderen aus dem von der Brennkraftmaschine aktuell abgegebenen Motordrehmoment M_M und einer Anfahrwandlung des hydrodynamischen Wandlers 2 berechnet werden. Die Drehzahl n_T und das Moment M_T an der Turbinenwelle werden über entsprechende Signale direkt von der Meßeinrichtung 24 an der Turbinenwelle 18 an das elektronische Getriebesteuergerät 11 ausgegeben.

In einer nachfolgenden Unterscheidungsfunktion S3 wird geprüft, ob die an der Getriebeabtriebswelle 22 ermittelte Getriebeausgangsdrehzahl n_AB kleiner als ein vorgegebener zweiter Grenzwert GW2 ist. Ist dies nicht der Fall, so erfolgt eine Verzweigung zu der Verarbeitungsfunktion S4 zur Rückkehr in das Hauptprogramm. Bei positivem Abfrageergebnis, d. h. daß die Getriebeausgangsdrehzahl n_AB kleiner als der zweite Grenzwert GW2 ist, wird eine weitere Unterscheidungsfunktion S5 zur Feststellung, ob eine berechnete Differenz DIFF(t_n) größer als ein vorgegebener erster Differenzgrenzwert GWl_DIFF ist, aktiviert. Hierbei bedeutet DIFF(t_n) die gemessene Differenz DIFF(t) zum Zeitpunkt n. Ist das Abfrageergebnis negativ, verzweigt das Programm zur Rückkehr in das Hauptprogramm zu der Verarbeitungsfunktion S4. Ist das Abfrageergebnis positiv, d. h. daß die Differenz DIFF(t_n) größer als der erste Differenzgrenzwert GW1_DIFF ist, wird eine weitere Unterscheidungsfunktion S6 gestartet, in welcher festgestellt wird, ob die Differenz DIFF(t_n) ein Maximalwert Max ist. Ist dies nicht der Fall, so verzweigt das Programm zu der Wartefunktion S7, und es wird solange eine Warteschleife durchlaufen, bis die Unterscheidungsfunktion S6 eine Differenz DIFF(t_n) als Maximalwert Max erkennt. Wenn die vorliegende Differenz DIFF(t_n) einen Maximalwert Max darstellt, wird diesem in einer Verarbeitungsfunktion S8 ein Fahrertyp-Sollwert FT_Soll_n aus mehreren Fahrerwert-Solltypen FT_Soll zugeordnet.

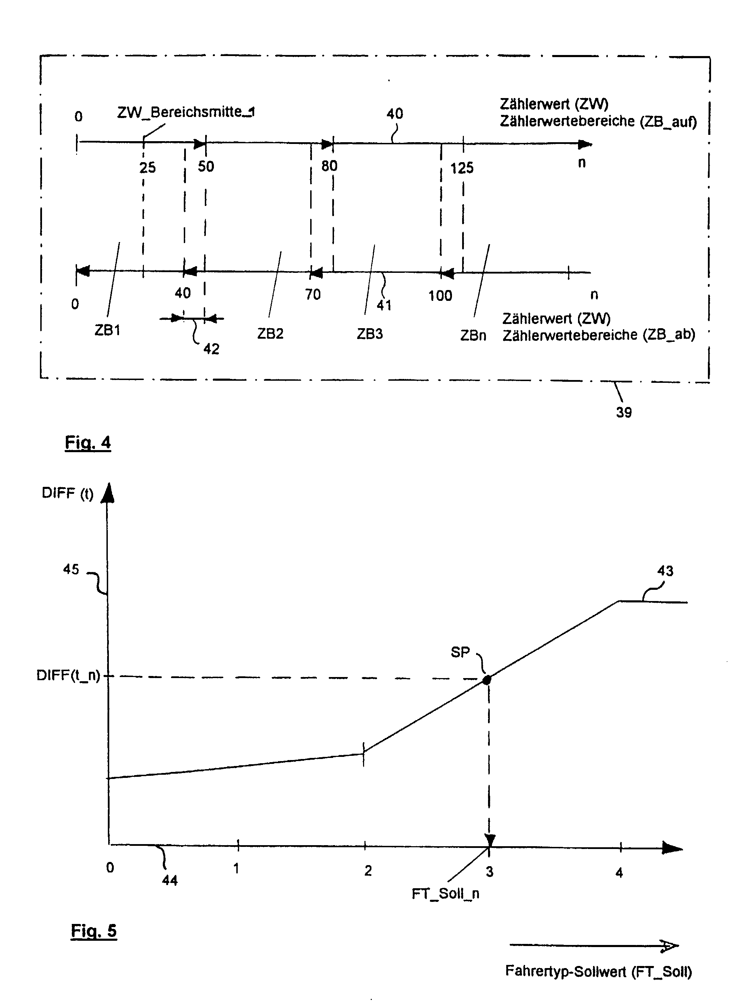

Diese Zuordnung erfolgt mittels einer die Abhängigkeit zwischen den Differenzen DIFF(t) und den Fahrertyp-Sollwerten FT_Soll bestimmenden Kennlinie 43, welche in Fig. 5 dargestellt ist.

Fig. 5 zeigt ein Koordinatensystem mit einer Abszisse 44, auf der der Fahrertyp-Sollwert FT_Soll aufgetragen ist, und einer Ordinate 45 auf der die zeitabhängige Differenz DIFF(t) aufgetragen ist. Die Kennlinie 43 stellt eine Zuordnung des Differenzwertes zum Fahrertyp-Sollwert dar. Graphisch anhand der Fig. 5 betrachtet kann die Zuordnung so dargestellt werden, daß eine Differenz DIFF(t_n) über die Kennlinie 43 mit einem Schnittpunkt SP einem Fahrertyp-Sollwert FT_Soll_n zugeordnet wird.

Der von der Verarbeitungsfunktion S8 bestimmte Fahrertyp-Sollwert FT_Soll_n wird an eine weitere Verarbeitungsfunktion S9 ausgegeben, welche zwischen dem Fahrertyp-Sollwert FT_Soll_n und einem Fahrertyp-Istwert FT_Ist ein Inkrement INKR bestimmt.

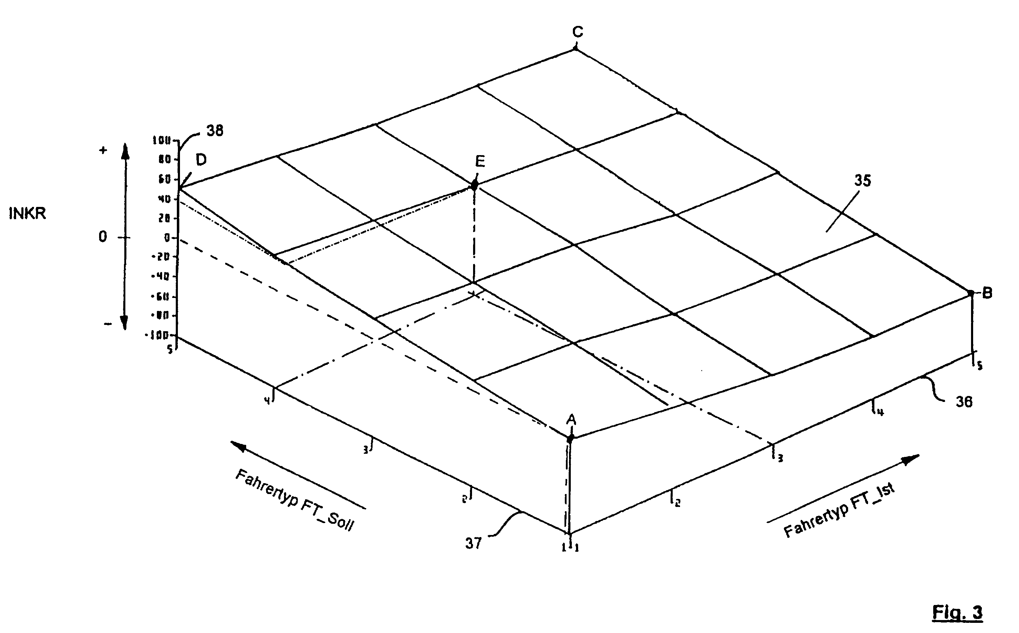

Bezug nehmend auf Fig. 3 ist ein vorgegebenes Kennfeld 35 dargestellt, welches die Abhängigkeit zwischen dem Fahrertyp-Sollwert FT_Soll, dem Fahrertyp-Istwert FT_Ist und dem Inkrement INKR bestimmt, und zur Ermittlung des Inkrementes INKR in der Verarbeitungsfunktion S9 dient. Dabei ist der Fahrertyp-Istwert FT_Ist auf einer ersten Achse 36, der Fahrertyp-Sollwert FT_Soll auf einer zweiten Achse 37 und das Inkrement INKR auf einer dritten Achse 38 aufgetragen. In dem Kennfeld 35 liegt eine Fläche mit den Endpunkten A, B, C und D.

Zur Ermittlung des Inkrementes INKR wird zunächst der Fahrertyp-Sollwert FT_Soll_n eingetragen und der Fahrertyp-Istwert FT_Ist bestimmt. Aus dem Schnittpunkt dieser beiden Werte in dem Kennfeld 35 ergibt sich das zugehörige Inkrement INKR an der Achse 38.

In Fig. 3 sind zwei Beispiele zur Ermittlung eines Inkrementes ersichtlich, wobei das erste Beispiel durch gestrichelte Linien und das zweite Beispiel durch strichpunktierte Linien dargestellt ist.

In dem ersten Beispiel wird der Fahrertyp-Sollwert FT_Soll mit dem Wert eins und der Fahrertyp-Istwert FT_Ist ebenfalls mit dem Wert eins bestimmt. Als Schnittpunkt ergibt sich der Eckpunkt A, dem der Inkrementwert Null zugeordnet ist.

In dem zweiten Beispiel wird ein Fahrertyp-Sollwert FT_Soll von vier und ein Fahrertyp-Istwert FT_Ist von drei aufgetragen. Daraus ergibt sich in dem Kennfeld 35 ein Schnittpunkt E, dem auf der Achse 38 der Inkrementwert 40 zugeordnet ist.

In einer Unterscheidungsfunktion S10, welche in Fig. 2 ersichtlich ist, wird nun geprüft, ob das Inkrement INKR gleich dem Nullwert ist.

Entsprechend dem Ergebnis, das die Unterscheidungsfunktion S10 liefert, wird ein in Fig. 4 dargestellter Zähler 39 mit Zählerwerten ZW, die in definierte, einem bestimmten Fahrertyp bzw. Anfahrstil zugeordnete Zählerwertbereiche ZB unterteilt sind, eingestellt. Der Zähler 39 weist einen Hochzähler 40 und einen Runterzähler 41 auf, welche symbolhaft als parallel zueinander verlaufende Zahlenstrahle dargestellt sind. Der Hochzähler 40 beginnt mit dem Wert Null und steigt kontinuierlich an bis zu einem Zählerwert ZW von n, und der in entgegengesetzte Richtung verlaufende Runterzähler 41 beginnt mit dem Zählerwert von n und steigt kontinuierlich ab bis zu dem Zählerwert Null.

Die Intervalle zwischen den Zählerwerten ZW sind bei dem Hochzähler 40 und dem Runterzähler 41 identisch, so daß sich die Zählerwerte des Hochzählers 40 und des Runterzählers 41 überdecken. Die Zählerwerte sind in n-Zählerwertebereiche aufgeteilt, wobei die Intervalle eines Zählerwertebereiches ZB_auf bei dem Hochzähler 40 und die eines Zählerwertebereiches ZB_ab bei dem Runterzähler 41 übereinstimmen. Die Zählerwertebereiche ZB_auf und ZB_ab sind jedoch zueinander um eine bestimmte Anzahl an Zählerwerten ZW, in dem Beispiel nach Fig. 4 um zehn Zählerwerte, versetzt. Der erste Zählerwertebereich ZB auf 1 des Hochzählers 40 beginnt gemäß Fig. 4 mit dem Zählerstand Null und endet bei dem Zählerwert 50. Der zweite Zählerwertebereich ZB_auf_2 des Hochzählers 40 beginnt bei dem Zählerwert 50 und endet bei dem Zählerwert 80. Dagegen beginnt in dem vorliegenden Beispiel der Zählerwertebereich ZB_ab_1 des Runterzählers 41 mit dem Zählerwert 40 und endet bei dem Zählerstand Null. Der zweite Zählerwertebereich ZB_ab_2 des Runterzählers 41 beginnt bei dem Zählerwert 70 und endet bei dem Zählerwert 40. Die Zählerwertebereiche ZB_auf, ZB_ab stellen Sportlichkeitsstufen eines Fahrertyps bzw. Fahrverhaltens dar, wobei mit aufsteigender Zahl des Zählerwertebereiches ZB_auf bzw. ZB_ab die Sportlichkeit der Bewegung eines Fahrzeugs höher eingeschätzt wird. Zwischen zwei korrelierenden Zählerwertebereichen ZB_auf_n und ZB_ab_n ergeben sich in den Grenzbereichen Überschneidungszonen 42 aufgrund der Versetzung der Zählerwertebereiche ZB_auf und ZB_ab zueinander. Die Breite einer Überschneidungszone 42 entspricht dem Zählerwerte-Intervall, um das die Zählerwertebereiche zueinander versetzt sind, d.h. die Überschneidungszone 42 in dem Beispiel nach Fig. 4 weist eine Breite von zehn Zählerwerten auf. Die Überschneidungszonen 42 stellen dabei Beruhigungszonen dar.

Liefert die Unterscheidungsfunktion S10 nach Fig. 2 das Ergebnis, daß das Inkrement INKR gleich Null ist, d.h., daß der Fahrertyp-Sollwert FT_Soll und der Fahrertyp-Istwert FT_Ist identisch sind, so wird in einer Verarbeitungsfunktion S11 der neue Zählerwert gemäß der Beziehung ZW_Neu = ZW_Alt +/- ZW_Null bestimmt. Dies bedeutet, daß der Zähler ZW_Neu auf die Bereichsmitte geführt wird, wobei sich das Vorzeichen des Terms ZW_Null daraus ergibt, ob der alte Zählerwert ZW_Alt größer oder kleiner der Bereichsmitte ist.

In Fig. 4 ist beispielhaft hierfür ein Zählerwert ZW_Bereichsmitte des Zählerwertbereiches ZB_auf_1 bzw. ZB_ab_1 eingezeichnet, dessen Zählerwert 25 beträgt.

Gibt die Unterscheidungsfunktion S10 das Ergebnis aus, daß das Inkrement größer oder kleiner Null ist, d. h., daß der Fahrertyp-Sollwert FT_Soll und Fahrertyp-Istwert FT_Ist voneinander abweichen, wird in einer Verarbeitungsfunktion S12 ein Summand aus einem vorhergehenden Zählerwert ZW_Alt und dem Inkrement INKR als neuer Zählerwert ZW_Neu bestimmt und der Zähler 39 dementsprechend eingestellt.

Im zweiten in Fig. 3 dargestellten Beispiel beträgt der Inkrementwert 50, d. h. der Zählerwert wird um den Betrag 50 erhöht.

Der Zähler 39 wird somit in Abhängigkeit der Fahrsituation direkt ohne Filterung in- bzw. dekrementiert oder bei Übereinstimmung von Fahrertyp-Istwert FT_Ist und Fahrertyp-Sollwert FT_Soll auf die Mitte eines Zählerwertebereiches gesetzt.

In einer nachfolgenden Unterscheidungsfunktion von S13 wird geprüft, ob die Differenz DIFF(t_n) kleiner als ein zweiter Differenzgrenzwert GW2_DIFF ist. Ist dies nicht der Fall, springt das Programm zu der Unterscheidungsfunktion S5 zurück, bei der geprüft wird, ob die Differenz DIFF(t_n) größer als der erste Differenzwert GW1_DIFF ist.

Bei einem positiven Abfrageergebnis der Unterscheidungsfunktion S13 wird in einer Verarbeitungsfunktion S14 dem neuen Zählerwert ZW_Neu eine Schaltkennlinie SL aus einer Vielzahl von Schaltkennlinien, die jeweils für einen bestimmten Fahrertyp bzw. Anfahrstil geeignet sind, zugeordnet.

Da ein sportlicher Fahrer, der z. B. an einer Ampel stark beschleunigt, eine hohe Momenten- bzw. Drehzahldifferenz bewirkt, kann das elektronische Getriebesteuergerät 11 somit die für den Fahrertyp geeignetste Schaltkennlinie mit hohen oder tiefen Schaltpunkten auswählen. Danach wird über eine Verarbeitungsfunktion S15 in das Hauptprogramm zurückgekehrt.

### Bezugszeichen

- 1: Automatgetriebe
- 1A: mechanischer Teil des Automatgetriebes
- 1B: Steuerungsteil des Automatgetriebes
- 2: hydrodynamischer Wandler
- 3: Schaltelement
- 4: Schaltelement
- 5: Schaltelement
- 6: Schaltelement
- 7: Schaltelement
- 8: Schaltelement
- 9: Schaltelement
- 10: hydraulisches Getriebesteuergerät
- 11: elektronisches Getriebesteuergerät
- 12: Antriebseinheit
- 13: Antriebswelle
- 14: Pumpenrad
- 15: Turbinenrad
- 16: Leitrad
- 17: Wandlerkupplung
- 18: Turbinenwelle
- 19: erster Planetenradsatz
- 20: zweiter Planetenradsatz
- 21: dritter Planetenradsatz
- 22: Getriebeausgangswelle
- 23: Turbinendrehzahl-Signal-Leitung
- 24: Turbinendrehzahl-Meßeinrichtung
- 25: Getriebeausgangsdrehzahl-Signal-Leitung
- 26: Getriebeausgangsdrehzahl-Meßeinrichtung
- 27: Motorsteuergerät
- 28: Micro-Controller
- 29: Speicher
- 30: Berechnungseinheit
- 31: Steuerungseinrichtung
- 32: Stellglied
- 33: Druckbeaufschlagungs-Pfeil
- 34: Raddrehzahl-Meßeinrichtung
- 35: Kennfeld
- 36: erste Achse des Kennfeldes
- 37: zweite Achse des Kennfeldes
- 38: dritte Achse des Kennfeldes
- 39: Zähler
- 40: Zahlenstrahl Hochzähler
- 41: Zahlenstrahl Runterzähler
- 42: Überschneidungszone
- 43: Kennlinie
- 44: Abszisse
- 45: Ordinate

## Patentansprüche

1. Verfahren zur Bewertung eines Anfahrvorganges bei einem Automatgetriebe eines Fahrzeuges mittels eines elektronischen Getriebesteuergerätes mit einer Berechnungseinheit, einem Micro-Controller, einer Speichereinrichtung und einer Steuerungseinrichtung zur Ansteuerung eines hydraulischen Getriebesteuergerätes, **gekennzeichnet** durch die Verfahrensschritte:
1. von einem Motorsteuergerät (27) wird ein einem Motordrehmoment (M_M) und einer Motordrehzahl (n_M) zugeordnetes Signal und von einer Meßeinrichtung (24) an einer Turbinenwelle (18) eines Wandlers (2) des Automatgetriebes (1) ein einem Moment (M_T) oder einer Drehzahl (n_T) der Turbinenwelle (18) zugeordnetes Signal an das elektronische Getriebesteuergerät (11) ausgegeben,
2. das elektronische Getriebesteuergerät (11) ermittelt einen Maximalwert (Max) aus zeitabhängigen Differenzen (DIFF(t) zwischen dem Motordrehmoment (M_M) und dem Moment (M_T) der Turbinenwelle (18) oder der Differenz (DIFF(t)) zwischen der Motordrehzahl (n_M) und der Drehzahl (n_T) der Turbinenwelle (18),
3. aus dem Maximalwert (Max) der Differenzen (DIFF(t)) wird eine durch einen Vergleich eines dem Maximum (Max) zugeordneten Fahrertyp-Sollwertes (FT_Soll_n) mit einem Fahrertyp-Istwert (FT_Ist) und die Einstellung eines Zählers (39) eine einen bestimmten Anfahrstil kennzeichnende Schaltkennlinie (SL) zur Ausgabe von Steuersignalen an das hydraulische Getriebesteuergerät (10) ermittelt.

2. Verfahren nach Anspruch 1, dadurch **gekennzeichnet,** daß der Maximalwert (Max) der zeitabhängigen Differenzen (DIFF(t)) derart ermittelt wird, daß
1. eine erste Unterscheidungsfunktion (S1) zur Feststellung, ob eine an einer Getriebeabtriebswelle (22) ermittelte Getriebeausgangsdrehzahl (n_AB) größer als ein vorgegebener erster Grenzwert (GW1) ist, aktiviert wird,
2. falls die Getriebeausgangsdrehzahl (n_AB) kleiner als oder gleich dem ersten Grenzwert (GW1) ist, eine Verarbeitungsfunktion (S4) zur Rückkehr in ein Hauptprogramm aktiviert wird und falls die Getriebeausgangsdrehzahl (n_AB) größer als der erste Grenzwert (GW1) ist, eine Berechnungsfunktion (S2) zur Berechnung der Differenzen (DIFF(t)) gestartet wird,
3. eine weitere Unterscheidungsfunktion (S3) zur Feststellung, ob die an der Getriebeabtriebswelle (22) ermittelte Getriebeausgangsdrehzahl (n_AB) größer als ein vorgegebener zweiter Grenzwert (GW2) ist, aktiviert wird,
4. falls die Getriebeausgangsdrehzahl (n_AB) größer als oder gleich dem zweiten Grenzwert (GW2) ist, die Verarbeitungsfunktion (S4) zur Rückkehr in das Hauptprogramm (S4) gestartet wird und falls die Getriebeausgangsdrehzahl (n_AB) kleiner als der zweite Grenzwert (GW2) ist, eine Unterscheidungsfunktion (S5) zur Feststellung, ob eine berechnete Differenz (DIFF(t_n) größer als ein vorgegebener erster Differenzgrenzwert (GW1_DIFF) ist, aktiviert wird,
5. bei Ermittlung, daß die Differenz (DIFF(t_n)) größer als der erste Differenzgrenzwert (GW1_DIFF) ist, eine weitere Unterscheidungsfunktion (S6) gestartet wird, zur Feststellung, ob die Differenz (DIFF(t_n)) der Maximalwert (Max) ist und falls die Differenz (DIFF(t_n)) kleiner als oder gleich dem ersten Differenzgrenzwert (GW1_DIFF) ist, die Verarbeitungsfunktion (S4) zur Rückkehr ins Hauptprogramm aktiviert wird,
6. solange eine Wartefunktion (S7) aktiviert wird, bis die Unterscheidungsfunktion (S6) eine Differenz (DIFF(t_n)) als Maximalwert (Max) erkennt.

3. Verfahren nach Anspruche 1 oder 2, dadurch **gekennzeichnet,** daß die Schaltkennlinie (SL) aus dem Maximalwert (Max) derart ermittelt wird, daß
1. eine Verarbeitungsfunktion (S8) dem Maximalwert (Max) den Fahrertyp-Sollwert (FT_Soll_n) aus mehreren Fahrerwert-Solltypen (FT_Soll) zuordnet,
2. der von der Verarbeitungsfunktion (S8) bestimmte Fahrertyp-Sollwert (FT_Soll_n) an eine weitere Verarbeitungsfunktion (S9) ausgegeben wird, wobei diese zwischen dem Fahrertyp-Sollwert (FT_Soll_n) und einem Fahrertyp-Istwert (FT_Ist) ein Inkrement (INKR) bestimmt,
3. das Inkrement (INKR) an eine Unterscheidungsfunktion (S10) ausgegeben wird, zur Feststellung, ob das Inkrement (INKR) gleich einem Nullwert ist,
4. falls ja, der Zähler (39) mit Zählerwerten (ZW), die in definierte, einem bestimmten Fahrverhalten bzw. Anfahrstil zugeordnete Zählerwertebereiche (ZB_auf, ZB_ab) unterteilt sind, derart eingestellt wird, daß als neuer Zählerwert (ZW_Neu) gemäß der Funktion ZW_Neu = ZW_Alt +/- ZW_Null in einer Verarbeitungsfunktion (S11) bestimmt wird und falls das Inkrement (INKR) größer oder kleiner Null ist, in einer Verarbeitungsfunktion (S12) ein Summand aus einem vorhergehenden Zählerwert (ZW Alt) und dem Inkrement (INKR) als neuer Zählerwert (ZW_Neu) bestimmt wird,
5. eine weitere Unterscheidungsfunktion (S13) gestartet wird, zur Feststellung, ob die Differenz (DIFF(t_n)) kleiner als ein zweiter Differenzgrenzwert (GW2_DIFF) ist,
6. falls ja, in einer Verarbeitungsfunktion (S14) dem neuen Zählerwert (ZW_Neu) eine Schaltkennlinie (SL) zugeordnet wird und eine Verarbeitungsfunktion (S15) zur Rückkehr in das Hauptprogramm gestartet wird und falls die Differenz (DIFF(t)) größer als oder gleich dem zweiten Differenzgrenzwert (GW2_DIFF) ist, die Unterscheidungsfunktion (S5) erneut gestartet wird.

4. Verfahren nach Anspruch 3, dadurch **gekennzeichnet,** daß die Verarbeitungsfunktion (S8) dem Maximalwert (Max) den Fahrertyp-Sollwert (FT_Soll_n)) mittels einer die Abhängigkeit zwischen den Differenzen (DIFF(t)) und den Fahrertyp-Sollwerten (FT_Soll) bestimmenden Kennlinie (43) zuordnet.

5. Verfahren nach Anspruch 3, dadurch **gekennzeichnet,** daß das Inkrement (INKR) in der Verarbeitungsfunktion (S9) aus einem vorgegebenen Kennfeld (35), welches die Abhängigkeit zwischen dem Fahrertyp-Sollwert (FT_Soll), dem Fahrertyp-Istwert (FT_Ist) und dem Inkrement (INKR) bestimmt, ermittelt wird.

6. Verfahren nach Anspruch 3, dadurch **gekennzeichnet,** daß die Zählerwertbereiche (ZB_auf, ZB_ab) des Zählers (39) in ihren Grenzbereichen Überschneidungszonen (42) aufweisen.

7. Verfahren nach einem der Ansprüche 1 bis 6, dadurch **gekennzeichnet,** daß das Motordrehmoment (M_M) in der Berechnungseinheit (30) des elektronischen Getriebesteuergerätes (11) aus der Motordrehzahl (n_M) und einer Einspritzzeit (t_ein) errechnet wird.

8. Verfahren nach einem der Ansprüche 1 bis 7, dadurch **gekennzeichnet,** daß das Moment (M_T) der Turbinenwelle (18) aus dem Motordrehmoment (M_M) und einer Anfahrwandlung des hydrodynamischen Wandlers (2) berechnet wird.

## Claims

1. Process for evaluating a start-up operation in an automatic transmission of a vehicle by means of an electronic transmission controller comprising a calculating unit, a microcontroller, a memory device and a control device for activating a hydraulic transmission controller, characterized by the process steps:
1. an engine control unit (27) supplies a signal, which is associated with an engine torque (M_M) and an engine speed (n_M), and a measuring device (24) at a turbine shaft (18) of a converter (2) of the automatic transmission (1) supplies a signal, which is associated with a torque (M_T) or a rotational speed (n_T) of the turbine shaft (18), to the electronic transmission controller (11),
2. the electronic transmission controller (11) determines a maximum value (Max) from time-dependent differences (DIFF(t) between the engine torque (M_M) and the torque (M_T) of the turbine shaft (18) or from the difference (DIFF(t)) between the engine speed (n_M) and the rotational speed (n_T) of the turbine shaft (18),
3. from the maximum value (Max) of the differences (DIFF(t)) through a comparison of a driver type setpoint value (FT_Soll_n), which is assigned to the maximum (Max), with a driver type actual value (FT_Ist) and through the adjustment of a counter (39) an operating characteristic curve (SL) characterizing a specific start-up style is determined for outputting control signals to the hydraulic transmission controller (10).

2. Process according to claim 1, characterized in that the maximum value (Max) of the time-dependent differences (DIFF(t)) is determined in that
1. a first discriminating function (S1) is activated in order to establish whether a transmission output speed (n_AB) determined at a transmission output shaft (22) is greater than a preset first limit value (GW1),
2. if the transmission output speed (n_AB) is lower than or equal to the first limit value (GW1), a processing function (S4) for return to a main program is activated and,
if the transmission output speed (n_AB) is greater than the first limit value (GW1), a calculating function (S2) for calculating the differences (DIFF(t)) is started,
3. a further discriminating function (S3) is activated in order to establish whether the transmission output speed (n_AB) determined at the transmission output shaft (22) is greater than a preset second limit value (GW2),
4. if the transmission output speed (n_AB) is greater than or equal to the second limit value (GW2), the processing function (S4) for return to the main program (S4) is started and,
if the transmission output speed (n_AB) is lower than the second limit value (GW2), a discriminating function (S5) is activated in order to establish whether a calculated difference (DIFF(t_n) is greater than a preset first difference limit value (GW1_DIFF),
5. upon determination that the difference (DIFF(t_n)) is greater than the first difference limit value (GW1_DIFF), a further discriminating function (S6) is started in order to establish whether the difference (DIFF(t_n)) is the maximum value (Max) and,
if the difference (DIFF(t_n)) is lower than or equal to the first difference limit value (GW1_DIFF), the processing function (S4) for return to the main program is activated,
6. a waiting function (S7) is activated until the discriminating function (S6) recognizes a difference (DIFF(t_n)) as maximum value (Max).

3. Process according to claim 1 or 2, characterized in that the operating characteristic curve (SL) is determined from the maximum value (Max) in that
1. a processing function (S8) assigns to the maximum value (Max) the driver type setpoint value (FT_Soll_n) from a plurality of driver value setpoint types (FT_Soll),
2. the driver type setpoint value (FT_Soll_n) determined by the processing function (S8) is supplied to a further processing function (S9), which determines an increment (INKR) between the driver type setpoint value (FT_Soll_n) and a driver type actual value (FT_Ist),
3. the increment (INKR) is supplied to a discriminating function (S10) in order to establish whether the increment (INKR) is equal to a zero value,
4. if yes, the counter (39) having counter values (ZW), which are subdivided into defined counter value ranges (ZB_up, ZB_down) assigned to a specific driving behaviour or start-up style, is adjusted in such a way that a new counter value (ZW_New) is determined in accordance with the function ZW_new = ZW_old +/- ZW_zero in a processing function (S11) and,
if the increment (INKR) is greater or less than zero, in a processing function (S12) a summand is determined from a preceding counter value (ZW_old) and the increment (INKR) as a new counter value (ZW_new),
5. a further discriminating function (S13) is started in order to establish whether the difference (DIFF(t_n)) is lower than a second difference limit value (GW2_DIFF),
6. if yes, in a processing function (S14) an operating characteristic curve (SL) is assigned to the new counter value (ZW_new) and a processing function (S15) for return to the main program is started and, if the difference (DIFF(t)) is greater than or equal to the second difference limit value (GW2_DIFF), the discriminating function (S5) is started again.

4. Process according to claim 3, characterized in that the processing function (S8) assigns to the maximum value (Max) the driver type setpoint value (FT_Soll_n) by means of a characteristic curve (43), which determines the dependence between the differences (DIFF(t)) and the driver type setpoint values (FT_Soll).

5. Process according to claim 3, characterized in that the increment (INKR) is determined in the processing function (S9) from a preset characteristic map (35), which determines the dependence between the driver type setpoint value (FT_Soll), the driver type actual value (FT_Ist) and the increment (INKR).

6. Process according to claim 3, characterized in that the counter value ranges (ZB_up, ZB_down) of the counter (39) have overlapping zones (42) in their limit regions.

7. Process according to one of claims 1 to 6, characterized in that the engine torque (M_M) is calculated in the calculating unit (30) of the electronic transmission controller (11) from the engine speed (n_M) and an injection time (t_ein).

8. Process according to one of claims 1 to 7, characterized in that the torque (M_T) of the turbine shaft (18) is calculated from the engine torque (M_M) and a start-up conversion of the hydrodynamic converter (2).

## Revendications

1. Procédé d'évaluation d'un processus de démarrage d'une boîte automatique d'un véhicule au moyen d'un appareil de commande électronique de la boîte, d'une unité de calcul, d'un micro-contrôleur, d'une unité de mémoire et d'une installation de commande pour activer un appareil de commande hydraulique de la boîte, **caractérisé en ce qu'** il comporte les phases suivants :
1. on fournit à l'appareil de commande électronique (11) de la boîte un signal correspondant à un couple d'un moteur (M_M) et un signal correspondant à une vitesse de rotation du moteur (n_M) issus d'un appareil de commande (27) d'un moteur, et un signal correspondant à un couple (M_T) ou d'une vitesse de rotation (n_T) de l'arbre de turbine (18) issus d'une installation de mesure (24) d'un arbre de turbine (18) d'un convertisseur (2) de la boîte automatique (1),
2. l'appareil de mesure électronique (11) fournit une valeur maximale (Max) de la différence dépendant du temps (DIFF(t)) entre le couple du moteur (M_M) et le couple (M_T) de l'arbre de turbine (18) ou de la différence (DIFF(t)) entre la vitesse de rotation (n_M) du moteur et la vitesse de rotation (n_T) de l'arbre de turbine (18),
3. on détermine, à partir de la valeur maximale (Max) des différences (DIFF(t)), une courbe de commande caractéristique (SL) d'un mode de démarrage déterminé par comparaison d'une valeur de consigne (FT_Soll_n) d'un type de conducteur attribué à la valeur maximale (Max) avec la valeur effective (FT_Ist) d'un type de conducteur, et on règle un compteur (39) pour générer des signaux de commande transmis à l'appareil de commande hydraulique de la boîte (10).

2. Procédé selon la revendication 1, **caractérisé en ce que** la valeur maximale (Max) des différences dépendant du temps (DIFF(t)) est déterminée de telle manière que :
1. un première fonction différentielle (S1) est mise en oeuvre pour déterminer si une vitesse de rotation (n_AB) de sortie de la boîte d'un arbre de sortie de la boîte (22) est supérieur à une première valeur limite (GW1 ) prédéterminée,
2. au cas où la vitesse de rotation (n_AB) de sortie de la boîte est inférieure ou égale à la première valeur limite (GW1), une fonction de traitement (S4) pour le retour dans un programme principal est activé, et,
si la vitesse de rotation (n_AB) de sortie de la boîte est supérieure à la première valeur limite (GW1 ) une fonction de calcul (S2) pour le calcul des différences (DIFF(t)) est démarrée,
3. une autre fonction différentielle (S3) pour déterminer si la vitesse de rotation (n_AB) de l'arbre de sortie de la boîte (22) est supérieure à une deuxième valeur limite (GW2) est activée,
4. au cas où la vitesse de rotation (n_AB) de la sortie de la boîte est supérieure ou égale à la deuxième valeur limite (GW2), la fonction de traitement (S4) est activée, pour le retour dans le programme principal, et si la vitesse de rotation (n_AB) de la sortie de la boîte est inférieure à la deuxième valeur limite (GW2), une fonction différentielle (S5) est activée pour déterminer si une différence (DIFF(t-n)) calculée est supérieure à une première valeur prédéterminée (GW1_DIFF) de la différence,
5. lors du constat que la différence (DIFF(t_n)) est supérieure à la première valeur limite de la différence (GW1_DIFF), une autre fonction différentielle (S6) est lancée pour déterminer si la différence (DIFF(t_n)) est la valeur maximale (Max) et
si la différence (DIFF(t_n)) est inférieure ou égale à la première valeur limite de la différence (GW1_DIFF), la fonction de traitement (S4) pour le retour dans le programme principal est activée,
6. une fonction d'attente (S7) est activée aussi longtemps que la fonction différentielle (S6) reconnaît une différence (DIFF(t_n)) comme valeur maximale (Max).

3. Procédé selon la revendication 1 ou 2, **caractérisé en ce que** la courbe de commande caractéristique (SL) est déterminée à partir de la valeur maximale (Max) de telle manière que,
1. une fonction de traitement (S8) attribue à la valeur maximale (Max) la valeur de consigne du type de conducteur (FT_Soll_n) à partir de plusieurs valeurs de consigne de types de conducteurs (FT_Soll),
2. la valeur de consigne du type de conducteur (FT_Soll_n) déterminée par la fonction de traitement (S8) est transmise à une autre fonction de traitement (S9), cette dernière étant agencée pour définir un incrément (INKR) entre la valeur de consigne du type de conducteur (FT_Soll_n) et une valeur effective (FT_Ist) du type de conducteur,
3. l'incrément (INKR) est transmis à une fonction différentielle (S10) pour déterminer si l'incrément (INKR) est égal à une valeur nulle,
4. dans l'affirmative, le compteur (39) avec des valeurs de compteur (ZW), qui sont réparties en secteurs de valeurs du compteur (ZB_auf, ZB_ab) correspondant à des comportements, respectivement des styles de conduite déterminés, est réglé de telle manière que la nouvelle valeur de compteur (ZW_Neu) est définie par la fonction ZW_Neu = ZW_Alt +/- ZW_Null dans une fonction de traitement (S11), et
au cas où l'incrément (INKR) est supérieur ou inférieur à zéro, une somme d'une valeur de compteur antérieure (ZW_Alt) et de l'incrément (INKR) est définie comme nouvelle valeur de compteur (ZW_Neu) dans une fonction de traitement (S12),
5. une autre fonction différentielle (S13) est démarrée pour déterminer si la différence (DIFF(t_n)) est inférieure à une deuxième valeur limite (GW2_DIFF),
6. dans l'affirmative, la nouvelle valeur de compteur (ZW_Neu) est attribuée à une courbe de commande caractéristique (SL) dans une fonction (S14), et une fonction de traitement (S15) est démarrée pour le retour dans le programme principal et, au cas où la différence (DIFF(t)) est supérieure ou égale à une deuxième valeur limite (GW2_DIFF), la fonction différentielle (S5) est à nouveau démarrée.

4. Procédé selon la revendication 3, **caractérisé en ce que** la fonction de traitement (S8) attribue une courbe caractéristique (43) à la valeur maximale (Max), cette courbe étant liée à la valeur de consigne (FT_Soll_n) du type de conducteur, par les différences (DIFF(t)) entre les valeurs de consigne (FT_Soll) des types de conducteurs.

5. Procédé selon la revendication 3, **caractérisé en ce que** l'incrément (INKR) de la fonction de traitement (S9) est déterminée à partir d'un secteur caractéristique prédéterminé (35) qui détermine la dépendance entre la valeur de consigne du type de conducteur (FT_Soll), la valeur effective du type de conducteur (FT_Ist) et l'incrément (INKR).

6. Procédé selon la revendication 3, **caractérisé en ce que** les données de valeurs du compteur (39) (ZB_auf, ZB_ab) présentent des zones de recouvrement (42) dans leurs zones limites.

7. Procédé selon l'une quelconque des revendications 1 à 6, **caractérisé en ce que** le couple moteur (M_M) est calculé à partir de la vitesse de rotation (n_M) du moteur et d'un temps d'injection (t_ein) par l'unité de calcul (30) de l'appareil électronique de commande de la boîte (11).

8. Procédé selon la revendication 1 à 7, **caractérisé en ce que** le couple (M_T) de l'arbre de turbine (18) est calculé à partir du couple moteur (M_M) et d'une conversion de démarrage du convertisseur hydrodynamique (2).
